(19) Europäisches Patentamt
European Patent Office
Office européen des brevets

(11) **EP 4 454 976 A1**

(12) **EUROPEAN PATENT APPLICATION**

(43) Date of publication:
**30.10.2024 Bulletin 2024/44**

(21) Application number: **23170872.8**

(22) Date of filing: **28.04.2023**

(51) International Patent Classification (IPC):
**B62D 15/02** $^{(2006.01)}$    **G01S 5/16** $^{(2006.01)}$

(52) Cooperative Patent Classification (CPC):
**B62D 15/0285**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Valeo Internal Automotive Software
Egypt, LLC
Giza, Cairo (EG)**

(72) Inventors:
• **Radwan, Mohamed
Cairo (EG)**
• **Messelhi, Youssef
Cairo (EG)**
• **Abdelmotmed, Mustafa
Cairo (EG)**
• **Khaled-Ahmed, Mohamed
Cairo (EG)**

(74) Representative: **Hofstetter, Schurack & Partner
Patent- und Rechtsanwaltskanzlei
PartG mbB
Balanstrasse 57
81541 München (DE)**

(54) **METHOD TO OPERATE AN AT LEAST ASSISTED PERPENDICULAR OR ANGLED PARKING FUNCTION FOR A VEHICLE**

(57) The invention relates to a method to operate an at least assisted perpendicular or angled parking function (3) for a vehicle (1), wherein the vehicle (1) approaches a perpendicular or angled parking space (4) with a forward driving maneuver until it reaches a current location (P) suitable for forward parking in the parking space (4). The method comprises: providing (S2) a sensor information (12) describing the parking space (4); under consideration of the sensor information (12) determining (S3) a parking maneuver (13) for backward parking comprising a change of driving direction at a turning location (B) from which the vehicle (1) is drivable backward (1) to an ending location (F) at which the vehicle (1) is at least partially located in the parking space (4); and operating (S4) the vehicle (1) according to the determined parking maneuver (13).

Fig.2

**Description**

The invention relates to a method to operate an at least assisted perpendicular or angled parking function for a vehicle. The at least assisted parking function is configured to perform assisted parking or parking of higher automation, such as semi-automatic or fully automatic parking. To start the method, the vehicle approaches a perpendicular or angled parking space with a forward driving maneuver until it reaches a current position suitable for forward parking in the perpendicular or angled parking space. The invention further relates to a vehicle, a control device for a vehicle, and a computer program product to perform such a method.

A vehicle may be equipped with a parking function for at least assisted parking into a perpendicular or angled parking space. It is assumed that the vehicle has already approached such a parking space with a forward driving maneuver. A front sensor device of the vehicle thereby detects the parking space. The parking function then identifies the parking space as a front parking space or front slot and may offer or automatically activate an assisted, semi-automatic or even fully automatic forward parking maneuver to a parking position in the identified parking space.

However, there may be situations in which a backward parking maneuver to the parking position is preferred or mandated by locally applicable regulations. For example, backward parking may be preferred by a driver of the vehicle to facilitate parking out of the parking space or to adapt to a parking orientation of neighboring vehicles. An adaptation of the parking function to such situations is therefore desirable, in particular to meet such preferences of the driver of the vehicle.

US 2020/0122775 A1 discloses an autonomous driving control device and an autonomous driving path computation method for a vehicle. The method is capable of computing a driving path without extremely changing a movement of a steering wheel during autonomous driving.

It is the object of the invention to adapt a parking function for parking into a perpendicular or angled parking space to preferences of a driver of a vehicle.

The independent claims solve the object.

A first aspect of the invention relates to a method to operate an at least assisted perpendicular or angled parking function for a vehicle. The at least assisted parking function is configured to provide at least assisted parking and hence assisted driving of the vehicle into a parking space. Besides, the parking function may as well be configured to provide semi-automatic or in particular fully automatic parking. There are hence multiple levels of automation covered by the method starting with assisted parking. The vehicle with the parking function approaches a perpendicular or angled parking space with a forward driving maneuver until it reaches a current location suitable for forward parking in the perpendicular or angled parking space. Thereby, the vehicle moves towards the parking space with its front first. Therefore, for example, a front camera and/or another front sensor device of the vehicle detects the parking space first. The angled parking space may be referred to as a fishbone parking space.

The current location is a position and orientation of the vehicle when the method starts, in particular, the position of a center of a rear axle of the vehicle. Thus, a current location information describing the current location may comprise coordinates and an orientation angle of the vehicle at these coordinates. The current location may be in vicinity of the parking space, for example on a road adjacent to the parking space. Alternatively, the vehicle may already be at least partially in the parking space at the current location. Thus, the vehicle may have dived partially into the parking space with its front. The forward driving maneuver may be intended to indicate to other drivers that the parking space in now reserved for the vehicle. After detecting the parking space and identifying it as such, the parking function typically determines at least one command for an at least assisted forward parking maneuver to a parking location inside the parking space. The command is then provided to the driver and/or a driving system and/or a steering system of the vehicle.

An angle in relation to a parking space width direction of the parking space at which the vehicle is moving towards the parking space may be between 35 degrees and 90 degrees. If the angle is smaller than 35 degrees, the parking space is not considered a front perpendicular or angled parking space in the sense of this invention. Besides, it is possible to differentiate between a right parking space and a left parking space. The right parking space is the parking space detected at a right side of the vehicle when approaching it at an angle between 35 degrees and less than 90 degrees in relation to the parking space width direction. The left parking space is the parking space detected at a left side of the vehicle when approaching it at an angle between 35 degrees and less than 90 degrees in relation to the parking space width direction.

One or two objects may limit the parking space in the parking space width direction. The respective object may be another vehicle parked in an adjacent parking space. Alternatively or additionally, the respective object may be an infrastructure component, in particular a wall of a garage and/or another building. Alternatively or additionally, the respective object may be a ground marking and/or another parking space boundary of the parking space. When approaching the current location, the vehicle first detects the presence of one of the objects, which is located closest to a driving path of the vehicle when approaching the current location. This object may be referred to as a start object or as a first detected object. When further approaching the parking space, the vehicle may detect the other object. This other object may be referred to as an end object or as a second detected object. The parking space is here a free space between the two objects.

The method is based on the assumption that when approaching a perpendicular and/or angled parking space with the forward driving maneuver, the parking function typically provides a forward parking maneuver into the parking space. However, a driver of the vehicle may prefer a backward parking maneuver. Besides, the parking space may be located on a parking ground with a specific parking rule regarding a direction of parking and thus may mandate or stipulate backward parking. Therefore, the inventive perpendicular or angled parking function is configured to change a driving direction of the parking maneuver from forward to backward although a simple forward driving maneuver into the parking space is possible.

The method comprises providing a sensor information describing the perpendicular or angled parking space. The front camera and/or the other front sensor device of the vehicle may capture the sensor information and transmit it to a control unit of the vehicle. The control unit may be an electronic control unit (ECU). The control unit may receive the sensor information and provides it. The control unit performs the method. The method is hence a computer-implemented method.

The method comprises determining a parking maneuver for backward parking under consideration of the provided sensor information. The parking maneuver for backward parking comprises a change of driving direction at a turning point. From the turning point, the vehicle is drivable backward to an ending location at which the vehicle is at least partially located in the parking space. The ending location is not necessarily a final parking location or a parking position in the parking space. However, the ending location in a location, at which at least a part of the vehicle is located in the parking space. At the ending location, a front part of the vehicle may protrude from the parking space. The parking maneuver may alternatively be referred to as a parking path or a parking trajectory.

The method comprises operating the vehicle at least assisted according to the determined parking maneuver from its current location to the turning location and from there to the ending location. By moving according to the determined parking maneuver, the at least assisted perpendicular or angled parking function is operated. In case of assisted parking, the control unit, for example, transmits commands for manual driving and/or steering and/or braking of the vehicle to be displayed by a display device in the vehicle to guide the driver to follow a path according to the determined parking maneuver with his or her vehicle. However, preferably the parking function operates the vehicle along the path of the determined parking maneuver semi-automatically or, in particular, fully automatically. In summary, the method shows how to backward park into a parking space although the parking space has first been identified for forward parking. This shows that the parking function for parking into a perpendicular or angled parking space is adaptable to preferences of the driver of the vehicle, when the preferences relate to a driving direction during parking.

The method may only start after the driver manually activates a backward parking mode of the parking function and/or depending on user-specific and/or vehicle-specific settings of the parking function. Alternatively or additionally, the method may start automatically if the vehicle positions itself in a parking environment with mandatory backward parking.

An embodiment of the invention comprises that the parking maneuver comprises driving between the turning location and the ending location with a constant steering angle of at least 80 percent, in particular between 90 percent and 95 percent, of a maximum steering angle of the steering system of the vehicle. The steering angle may be any value between more than 80 percent and 100 percent of the maximum steering angle. Preferably, the vehicle drives at the maximum steering angle and thus with a minimum rotational radius. Thus at least between the turning location and the ending location, the vehicle drives with great or even maximum steering and hence preferably with the smallest radius of rotation possible. Therefore, this backward part of the parking maneuver can be performed in parking environments with little free space for maneuvering, because the radius of movement of the vehicle is kept as small as possible. The steering angle is kept constant during the whole movement between the turning location and the ending location. A driving path between these two locations follows hence a part of a circular arc.

Another embodiment of the invention comprises that the parking maneuver comprises driving to a starting location from which the turning location is reachable by driving forward with a constant steering angle of at least 80 percent, in particular between 90 percent and 95 percent, of a maximum steering angle of the steering system of the vehicle. Preferably, the steering angle is the maximum steering angle so that the vehicle drives with the minimum rotational radius. Preferably, the rotational radius of the vehicle is the same for the movement between the turning and the ending location on one hand and the starting and the turning location on the other hand. The starting location may be the current location. However, the current location and the starting location may be two spatially separated locations. Driving from the current location to the starting location may be oriented backward or forward depending on the position and/or orientation of the current location in relation to the starting location. Any steering between the starting location and the turning location is performed at the constant steering angle of the vehicle. However, a driving path between the current location and the starting location is preferably a straight line. This means that there is no steering required for moving the vehicle from the current location to the starting location. It is thus possible to first move the vehicle to a location suitable for the intended changing in direction.

The parking maneuver comprises two curved trajectories, a first one between the starting location and the turning location and a second one between the turning location and the ending location. Both curved trajectories require driving with the rotational radius of the vehicle when driving with the constant steering angle. Therefore, a total space required to perform the parking maneuver according to the determined parking maneuver is as small as possible. Thus, the described method is particularly suitable for parking environments that are particularly limited in free space for maneuvering.

A further embodiment comprises that the parking maneuver follows a first curved trajectory between the starting location and the turning location. The first curved trajectory follows a circular segment of a first circle. The first circle has a first circle center. The first circle center is calculated under consideration of an object corner of an object that laterally limits the parking space in direction of the turning location. This object is here the end object or the second detected object described above. To change the direction coming from a forward driving direction, the vehicle necessarily gets close to the object limiting the parking space laterally. The object corner is an outermost corner of the object, wherein the vehicle has to pass by this outermost corner without collision during parking. If the object is, for example, the parked vehicle, the object corner is the front or rear outermost corner of the vehicle that is located at an entrance area of the parking space. In case of a garage, the object is one of the walls of the garage that laterally limits the parking space in the direction of the turning location. Determining the first curved trajectory is required to determine the parking maneuver as a collision free vehicle movement. It is therefore particularly reasonable that this trajectory depends on the location of the object.

Another embodiment comprises that the first circle center is located at an intersection point of a vehicle parallel passing line and a second circle. The second circle has a radius equal to a rotational radius of an outermost corner of the vehicle when driving with the rotational radius of the vehicle when driving with the constant steering angle. The outermost corner of the vehicle is here one of the front outermost corners, more precisely the one that is closest to the parking space and/or the furthest away from the object corner. For the right parking space, the outermost corner is a right front outermost corner of the vehicle, and for the left parking space, it is the left front outermost corner of the vehicle. The method hence considers a radius of rotation of a specific vehicle point of the vehicle when the vehicle moves with the maximum steering angle. The specific vehicle point is the part of the vehicle that may collide with the object when moved towards or away from the turning location. Therefore, this rotational radius of the outermost corner of the vehicle is considered here. The second circle has a second circle center that is located at the object corner.

The vehicle parallel passing line is aligned parallel to a vehicle passing line. The vehicle passing line is a straight line, which the vehicle follows if it drives straight forward from the current location towards the parking space. There is an offset between the vehicle passing line and the vehicle parallel passing line. This offset equals to the rotational radius of the vehicle when driving with the constant steering angle. After determining the vehicle parallel passing line based on the vehicle passing line and the minimum rotational angle and after determining the second circle, the intersection point between the second circle and the vehicle parallel passing line can easily be calculated and hence determined. The part of the parking maneuver between the starting point and the turning point is thus determinable in a reliable way.

A further embodiment specifies that the rotational radius of the outermost corner of the vehicle is calculated under consideration of various variables. These are the minimum rotation radius, a vehicle length of the vehicle, a vehicle width of the vehicle and a distance between the rear axle of the vehicle and a rear bumper of the vehicle. The rotational radius of the outermost corner hence depends mainly on vehicle specifics and is thus vehicle dependent. This allows performing the method suitable for an individual vehicle. The provided parking function is thus particularly robust.

Moreover, an embodiment comprises that the starting location is calculated by projecting the first circle center on the vehicle passing line. Therefore, the vehicle may follow its vehicle passing line forward or backward without any steering to drive from the current location to the starting location. Steering is hence only required to reach the turning location and to move away from the turning location. Therefore, a number of required steering operations is particularly low. Thus, the method is particularly comfortable for the driver.

Another embodiment comprises that the parking maneuver follows a second curved trajectory between the turning location and the ending location. The second curved trajectory follows a circular segment of a third circle. The third circle has a third circle center. The third circle center is calculated under consideration of the first circle center and a goal line. The goal line is a line on which the vehicle is located at the ending location. The goal line may be parallel to a surface of the object on a side of the object that faces the parking space. The goal line preferably connects the ending location with a final parking location in the parking space. Alternatively, the goal line may be referred to as a parking line. It is hence possible to determine how to steering when driving away from the turning location because this part of the parking maneuver follows the second curved trajectory. This contributes to determining the parking maneuver between the turning location and the ending location.

Moreover, according to an embodiment the third circle center is located at an intersection point of a goal parallel line and a fourth circle. The fourth circle has a radius equal to the double rotational radius of the vehicle when driving with the constant steering angle. The radius is hence two times the rotational radius of the vehicle when driving with the constant steering angle and hence, for example, two times the offset between the vehicle parallel passing line and the vehicle passing line. A fourth circle center of the fourth circle is equal to the first circle center. The first and fourth circle hence have a common circle center but different radii. The goal parallel line is aligned parallel to the goal line at an offset equal to the rotational radius of the vehicle when driving with the constant steering angle in direction of the object. This means that first the goal line is projected on the goal parallel line in direction of the object. Therefore, the goal parallel line is closer to the object than to the start object. This allows for a precise determination of the third circle center and hence of the second curved trajectory between the turning location and the ending location

In another embodiment, the method comprises that the turning location is located at a midpoint of a straight line between the first circle center and the third circle center. It has already been described how the first circle center and the third circle center are calculated and hence determined. Then, the two circle centers of these two circles are connected directly. At the center between the two circle centers and hence halfway between the first circle center and the third circle center, the turning location is positioned. This is particularly reasonable as both curved trajectories have the same radius due to the prerequisite that the vehicle is always moved at the rotational radius of the vehicle when driving with the constant steering angle, which is preferably the minimum rotational radius, when it is steered during the described parking. The turning point is thus easily determined.

Another embodiment comprises that the driving direction at the turning location is perpendicular to the straight line. The straight line is the line connecting the first circle center and the third circle center. Whenever the vehicle reaches the turning location, either during the forward or during the backward part of the parking maneuver, the driving direction at this location is always perpendicular to this straight line. This may be verified during performing the method to ensure that the turning location has been determined correctly.

Another embodiment comprises that the ending location is calculated by projecting the third circle line on the goal line. The ending location of the parking maneuver hence depends on the determined third circle center. Therefore, it is typically a location that is different from a final parking location. The final parking location is typically deeper in the parking space towards an end line of the parking space that limits the parking space in a length direction of the parking space. This explains how the ending location can be determined accurately.

A preferred embodiment comprises that the parking maneuver comprises driving straight backward from the ending location to the parking location in the parking space. Compared to the ending location, the parking location is closer to the end line that limits the parking space in the length direction of the parking space. The end line is preferably perpendicular to the goal line in case of a perpendicular parking space. In summary, the vehicle may move from its current location to the starting location, from there at the maximum steering angle forward to the turning location, from there at the maximum steering angle backward to the ending location, and from there straight backward to the parking location. This means that the parking maneuver may comprise up to five locations between four individual segments of the parking maneuver. A detailed method to change parking direction from forward to backward parking has thus been described.

All described steps of the method, meaning all the described calculations, are performed by the control unit of the vehicle. The vehicle is preferably a motor vehicle. The vehicle is, for example, a passenger car, a truck, a bus, a motorcycle, and/or a moped. The motor vehicle comprises a control unit to perform the method.

Furthermore, an aspect of the invention relates to a vehicle. The vehicle is configured to perform the above-described method.

Another aspect of the invention relates to a control unit for a vehicle. The control unit is configured to perform the above-described method. The control unit performs the method.

The control unit is a computing unit. The control unit may in particular be understood as a data processing device, which comprises processing circuitry. The control unit can therefore in particular process data to perform computing operations. This may also include operations to perform indexed accesses to a data structure, for example a look-up table, LUT.

In particular, the control unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The control unit may also include one or more processors, for example one or more microprocessors, one or more central processing units, CPU, one or more graphics processing units, GPU, and/or one or more signal processors, in particular one or more digital signal processors, DSP. The control unit may also include a physical or a virtual cluster of computers or other of said units.

In various embodiments, the control unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

A further aspect of the invention relates to a computer program product. Besides, an aspect of the invention relates to computer program product which comprises instructions. When the program is executed by a computer such as the control unit, the instructions cause the computer to carry out the above-described method. The computer program product is a computer program.

Furthermore, the invention may comprise a computer-readable storage medium comprising instructions which, when executed by a computer such as the control unit, cause the computer to carry out the above-described method.

Further features of the invention are apparent from the claims, the figures and the description of figures. The invention includes combinations of the described embodiments. The embodiments described in context with the method according to the invention, individually as well as in combination with each other, apply accordingly, as far as applicable, to the vehicle according to the invention, the control unit according to the invention, and the computer program product according to the invention.

A respective information in the sense of the invention may comprise respective data. This means that the sensor information may comprise or may be sensor data.

The figures show in:

Fig. 1 a schematic representation of two parking spaces suitable for forward parking;

Fig. 2 a schematic representation of a parking maneuver into a parking space comprising first moving in a forward direction;

Fig. 3 a schematic representation of a parking maneuver into a parking space comprising first moving in a backward direction; and

Fig. 4 a schematic representation of a method to operate an at least assisted perpendicular or angled parking function for a vehicle.

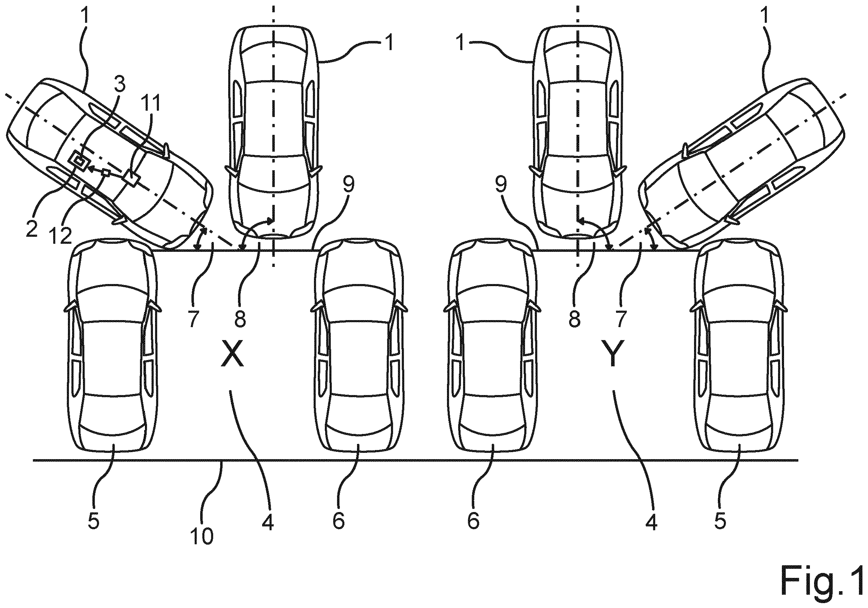

Fig. 1 shows two possible scenarios X and Y in which the inventive method may be applied. For both scenarios X, Y, two possible orientations of a vehicle 1 are sketched as examples. The vehicle 1 may comprise a control unit 2 such as an electronic control unit (ECU) of the vehicle 1. The control unit 2 provides an at least assisted perpendicular angled parking function 3. This parking function 3 may be configured for assisted, semi-automatic and/or fully automatic parking into a parking space 4. The parking space 4 is a perpendicular parking space 4. It may alternatively be an angles parking space 4. The parking space 4 is laterally limited by a first detected object 5 (start object) and a second detected object 6 (end object). In the following, the second detected object 6 is referred to as the object 6. This object 6 may influence the method, whereas the first detected object 5 does not need to be considered to perform the method.

The vehicle 1 may approach the parking space 4 at an angle 7, 8 between a minimum angle 7 of 35 degrees and a maximum angle 8 of 90 degrees. If when approaching the parking space 4 the angle 7, 8 is smaller than 35 degrees, the parking space 4 is not considered a front perpendicular or angled parking space 4.

In scenario X, the vehicle 1 approaches the parking space 4 coming from a left side with its right front corner closest to the parking space 4. Therefore, the parking space 4 in scenario X may be referred to as a right front slot or as a right front parking space 4. In scenario Y, the vehicle 1 approaches the parking space 4 coming from a right side with its left front corner closest to the parking space 4. Therefore, the parking space 4 in scenario Y may be referred to as a left front slot or as a left front parking space 4. The respective parking space 4 is spatially limited by two imaginary lines, which are here a start line 9 and an end line 10 of the parking space 4. The end line 10 is a line that limits the parking space 4 in a length direction of the parking space 4.

The vehicle 1 may comprise a front camera 11 and/or any other front sensor device capable of detecting the parking space 4. The other front sensor device may be, for example, a radar device, a lidar device and/or an ultrasonic sensor. The front camera 11 or the other front sensor device may capture a sensor information 12 that, for example, comprises sensor data. The captured sensor information 12 is transmitted to the control unit 2 so that the control unit 2 may provide the sensor information 12 to perform the inventive method as described in the following. Alternatively or additionally, the vehicle 1 may receive the sensor information 12 from an external device via vehicle-to-vehicle- and/or vehicle-to-infrastructure-communication.

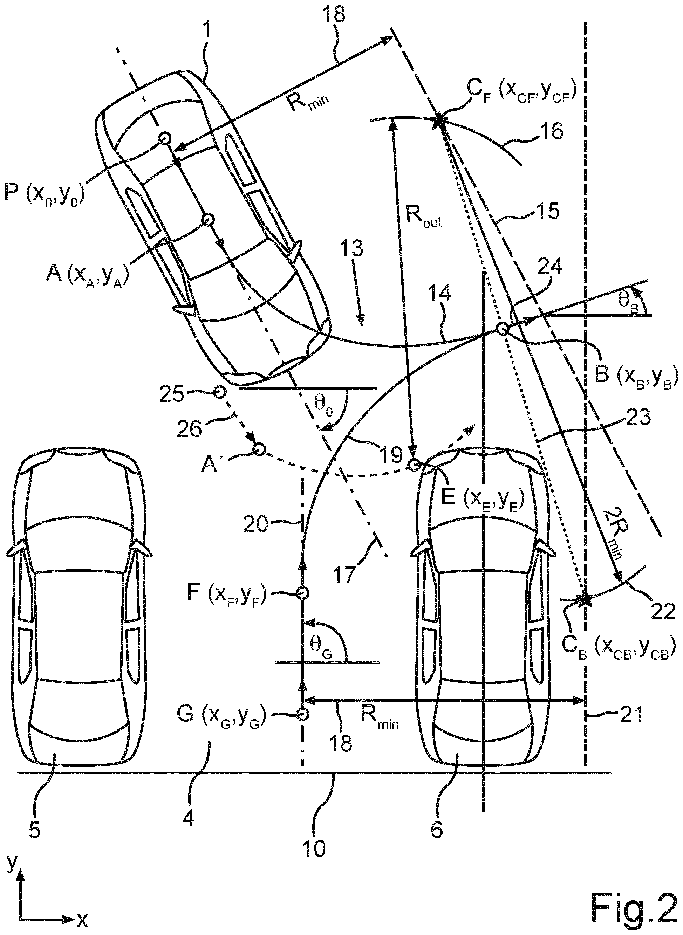

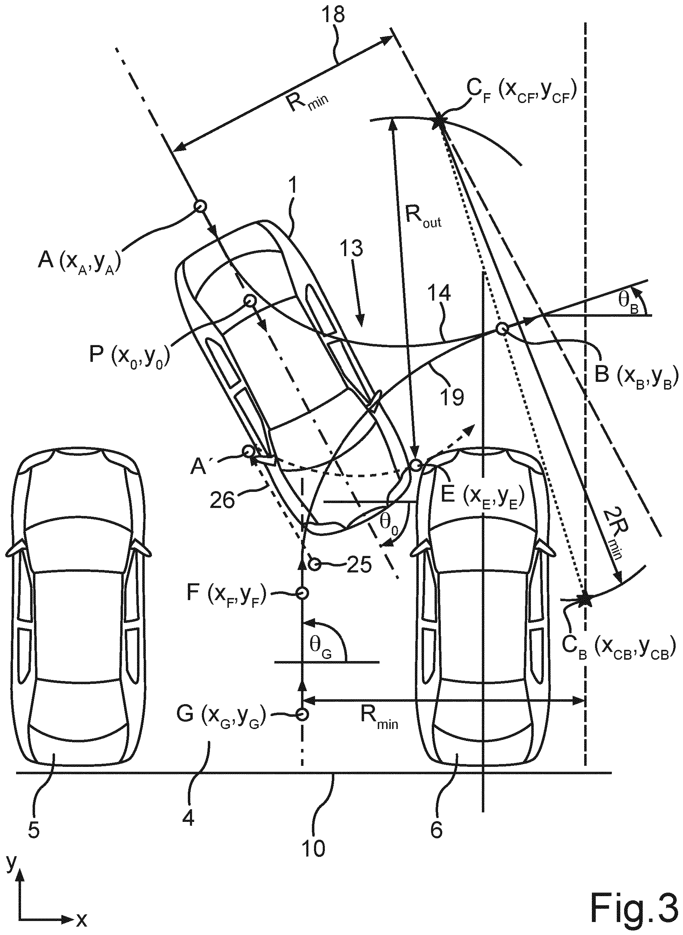

Fig. 2 and 3 show possible parking maneuvers 13 into the parking space 4 according to the inventive method. The method is based on the idea that the parking space 4 is suitable for forward parking. This means that the vehicle 1 approaches the perpendicular or angled parking space 4 with a forward driving maneuver until it reaches a current location P. The current location P is suitable for forward parking in the parking space 4. However, a driver of the vehicle 1 may prefer that the parking maneuver 13 into the parking space 4 is a backward parking maneuver 13. Therefore, the vehicle 1 is first turned at a turning location B. This means that the parking maneuver 13 comprises a change of driving direction at the turning point B from which the vehicle 1 drives backward with a constant steering angle of at least 80 percent of a maximum steering angle of a steering system of the vehicle 1 to an ending location F. Preferably, the vehicles 1 drives with the maximum steering angle and hence with a minimum rotational radius $R_{min}$ of the vehicle 1. The constant steering angle is in particular between 90 percent and 95 percent of the maximum steering angle. At the ending location F, the vehicle 1 is at least partially located in the parking space 4.

First, the parking maneuver 13 may comprise driving to a starting location A. The starting location A may be reachable from the current location P by driving straight forward as sketched in Fig. 2. From the starting location A, the turning location B may be reachable by driving forward with the rotational radius of the vehicle 1 when driving with the constant steering angle. This rotational radius is in the following referred to as the minimum rotational radius $R_{min}$. During the driving maneuver from the starting location A to the turning location B, the vehicle 1 may follow a first curved trajectory 14. The first curved trajectory 14 may follow a circular segment of a first circle with a first circle center $C_F$. The first circle center $C_F$ may be calculated under consideration of an object corner E of the object 6 that laterally limits the parking space 4 in the direction of the turning location B. The first circle center $C_F$ may be located at an intersection point of the vehicle parallel passing line 15 and a second circle 16. The second circle 16 may have a radius equal to a rotational radius $R_{out}$ of an outermost corner 25 of the vehicle 1. The rotational radius $R_{out}$ of the outermost corner 25 of the vehicle 1 may be the radius of rotation when the vehicle 1 drives with the minimum rotational radius $R_{min}$. The second circle 16 may comprise a second circle center located at the object corner E. The vehicle parallel passing line 15 may be aligned parallel to a vehicle passing line 17, which the vehicle may follow if it drives straight forward and/or backward from the current location P. There may be an offset 18 equal to the minimum rotational radius $R_{min}$ between the vehicle parallel passing line 15 and the vehicle passing line 17. After determining the first circle center $C_F$, the starting location A may be calculated by projecting the first circle center $C_F$ on the vehicle passing line 17.

The rotational radius of the outermost corner of the vehicle $R_{out}$ may be calculated under consideration of the minimum rotation radius $R_{min}$, a vehicle length L, a vehicle width w and a distance rr between a rear axle and a rear bumper of the vehicle 1.

The parking maneuver 13 may follow as well a second curved trajectory 19 between the turning location B and the ending location F. The second curved trajectory 19 may follow a circular segment of a third circle with a third circle center $C_B$. The third circle center $C_B$ may be calculated under consideration of the first circle center $C_F$ and a goal line 20 on which the vehicle 1 is located at the ending location F. The goal line 20 is here perpendicular to the end line 10, because the parking space 4 is here the perpendicular parking space 4. The third circle center $C_B$ may be located at an intersection point of a goal parallel line 21 and a fourth circle 22. The fourth circle 22 may have a radius equal to the double minimum rotational radius $2R_{min}$. The fourth circle center may be equal to the first circle center $C_F$. The goal parallel line 21 may be aligned parallel to the goal line 20 at an offset 18 equal to the minimum rotational radius $R_{min}$ in direction of the object 6. The turning location B may be located at a midpoint of a straight line 23 between the first circle center $C_F$ and the third circle center $C_B$. A driving direction 24 of the vehicle 1 at the turning location B is always perpendicular to the straight line 23. The ending location F may be calculated by projecting the third circle center $C_B$ on the goal line 20.

The parking maneuver 13 may comprise driving straight backward from the ending location F to a parking location G, which may be alternatively referred to as a goal location. The parking location G is located in the parking space 4. Compared to the ending location F, the parking location G is closer to the end line 10 that limits the parking space 4 in a length direction. When parked at the parking location G, preferably no part of the vehicle 1 protrudes from the parking space 4.

Fig. 3 differs from Fig. 2 regarding the movement direction along the vehicle passing line 17 to drive from the current location P to the starting location A. Here, the vehicle 1 has already driven far towards the parking space 4 and therefore may have to move backward to reach the turning point B for changing driving directions.

In Fig. 2 and 3 a trajectory 26 for the front outermost corner 25 of the vehicle 1 is sketched with dashed lines. The front outermost corner 25 is here moved to the respective starting location A' for the front outermost corner 25. From there, it is moved towards the turning location B. The rest of the movement along the parking maneuver 13 is not sketched for the front outermost corner 25. The arrows in Fig. 2 and Fig. 3 on segments of the parking maneuver 13 typically indicate an orientation of the front of the vehicle 1. The arrows in Fig. 2 and Fig. 3 on trajectory 26 indicate the direction of motion of the front outermost corner 25.

The angles θ and the coordinates in x- and y-direction of the locations P, A, B, F, G and the circle centers $C_F$, $C_B$, which are marked in Fig. 2 and 3, may be relevant for the below-described calculations.

In principle, the described parking maneuver 13 can also be calculated for angled parking spaces 4 such as a fishbone parking space 4.

Alternatively or additionally to vehicles 1 as the two objects 5, 6 as sketched so far, walls of a garage and/or ground markings may spatially limit the parking space 4 as the objects 5, 6. In case of the garage, the end line 10 may be another wall of a garage.

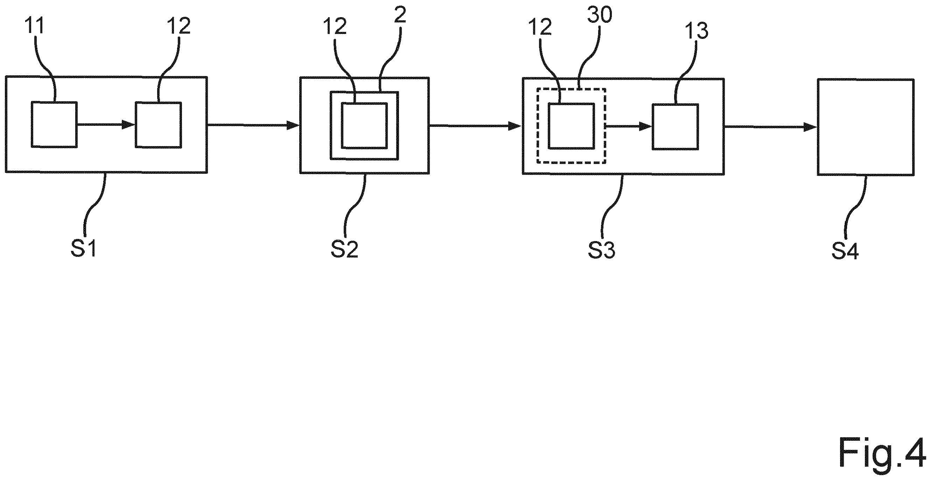

Fig. 4 shows the main steps of the method. In a step S1, the front camera 11 of the vehicle 1 and/or the other sensor device may capture the sensor information 12 that describes the perpendicular or angled parking space 4. In a step S2, the control unit 2 provides the sensor information 12. This means that in the step S2, the sensor information 12 is provided.

In a step S3, the parking maneuver 13 is determined. This is, for example, possible by applying a parking maneuver determination algorithm 30 on the sensor information 12. The parking maneuver determination algorithm 30 comprises at least one rule to perform, for example, the above-described different calculations to determine the individual locations P, A, B, F, G of the parking maneuver 12. Afterwards in a step S4, the vehicle 1 is operated according to the determined parking maneuver 13 from its current location P at least to the turning location B and from there to the ending location F. Preferably, it is also moved to the parking location G. The described parking function 3 is at least assisted. However, it may have a higher level of automation and may operate the vehicle 1 semi-automatically and/or fully automatically.

Preferably, the outermost corner 25 of the vehicle 1, the object corner E, the minimum rotation radius $R_{min}$, the vehicle length L, the vehicle width w, the distance rr, and/or the end line 10 comprise a tolerance interval and hence safety margins. The other mentioned values and/or point may as well comprise the safety margins.

In summary, a new parking feature for perpendicular backward parking for front slots is described.

The next section details how a parking path (parking maneuver 13) may be computed to guide the vehicle 1 to park perpendicular backward after the parking space 4 is offered. Given the vehicle initial position P when the parking space 4 is offered, the slot boundaries (start object 5 and end object 6) and the goal parking position (parking location G) to be reached; the full path can be computed. The computed path is composed mainly of four segments, first straight segment then forward circular segment then backward circular segment then finally straight backward segment to the parking final position (parking location G). The first straight segment can be either forward or backward depending on the vehicle initial position (current position P) when the parking space 4 is offered. If the parking space 4 is offered earlier enough such that the vehicle initial position (current position P) is completely outside the parking space 4 with enough distance, then the first straight segment shall be forward. On the other hand, if the parking space offering is late after the vehicle 1 already dived inside the parking space 4 such that it is fully detected then the first straight segment shall be backward.

As shown in Fig. 2 and 3, the perpendicular backward parking path (parking maneuver 13) is composed of two steps (forward then backward) in case the parking space 4 is offered earlier as shown in Fig. 2, and three steps (straight backward then forward then backward) in case the parking space 4 is offered later as shown in Fig. 3. In both cases given the vehicle initial position and orientation $P$: $(x_0, y_0, \theta_0)$, the slot boundaries accompanied with both the End Object Corner point (object corner) $E$: $(x_E, y_E)$ and the final Goal parking position and orientation $G$: $(x_G, y_G, \theta_G)$ defined; then the path can be obtained by computing the location points $A$, $B$, and $F$ connecting $P$ with $G$ such that the generated path is connecting the points in the sequence $P \rightarrow A \rightarrow B \rightarrow F \rightarrow G$.

The point A (starting position A) is located on the passing line 17 of the vehicle 1 and defines the start of the forward circular arc that the vehicle 1 shall maneuver towards the end object 6 so that the front outermost corner 25 of the vehicle 1 (front right outer corner including safety margins as shown in Fig. 2 for right slot) is passing through the End Object corner point E (including safety margins as well). Point $B$ (turning point) defines the end of the forward circular arc and the beginning of the backward circular arc towards the goal line 20. Both forward and backward circular arcs are defined with maximum possible steering of the vehicle 1 (minimum radius of rotation $R_{min}$) to guarantee the maneuvering outside the parking space 4 to be within minimum possible space covered. Finally, point F (ending point) defines the end of the backward circular arc and is located on the goal line 20, where the vehicle 1 shall just move backward straight from the ending point F to reach the final parking Goal position at $G$ (parking location G). The two mentioned arcs are the first curved trajectory 14 and the second curved trajectory 19.

The points $C_F$ and $C_B$ define the centers of rotation for both the forward and backward circular arcs, and are located at positions $(x_{C_F}, y_{C_F})$ and $(x_{C_B}, y_{C_B})$, respectively. The locations of all points and the accompanied paths connecting them are defined within x - y global coordinates predefiened by the system as shown in Fig. 2 and 3. The radius of rotation of the outermost corner point of the vehicle $R_{out}$ corresponding to the circular rotation of the vehicle 1 with the minimum radius of rotation $R_{min}$ can be obtained as follows.

$$R_{out} = \sqrt{\left(R_{min} + \frac{w}{2}\right)^2 + (L - rr)^2}$$

where *L, w,* and *rr* present the vehicle length, width, and distance of rear axle to rear bumper including safety margins, respectively.

The calculation of the locations A, B, F and G forming the parking path (parking maneuver 13) can be defined in the following steps.

    1- Since the forward circular arc is defined with minimum radius of rotation and lets the vehicle's outermost front corner pass through the end object corner point, then the center of rotation of the forward circular arc $C_F$ can be defined as the intersection of the vehicle parallel passing line 15 located at distance $R_{min}$ from the vehicle passing line 17 towards the end object 6 with the circular arc drawn from the end object corner point E with radius $R_{out}$.

2- After $C_F$ is computed, the point A can be computed as the projection of $C_F$ on the given vehicle passing line 17. The first straight segment of the path can be obtained as it is connecting the initial position P given with the position A computed.

3- As the forward and backward circular arc are tangent to each other at the point B and the backward circular arc is tangential with the given goal line 20, then the center of rotation of the backward circular arc $C_B$ can be obtained as the intersection of the goal parallel line 21 located at distance $R_{min}$ from the goal line 20 towards the end object 6 with the circular arc drawn from the center of rotation of the forward circular arc $C_F$ with radius $2R_{min}$.

4- Point B can be computed as the intermediate point (midpoint) between the two computed centers $C_F$ and $C_B$. The heading of the vehicle at point B ($\theta_B$) is the angle of the perpendicular line to the line connecting the centers of circles $C_F$ and $CB$.

5- Finally, point F can be computed as the projection of $C_B$ on the given goal line 20. By computing F, the backward circular arc with minimum radius of rotation connecting B with F can be obtained. Moreover, the final straight segment of the path connecting F with G along the goal line 20 can be obtained as well. Thus, the full parking path (parking maneuver 13) is finally computed.

According to the defined steps, there are two main geometric operations needed. The first one is for the computing of the intersection of two lines for the projection operations to compute points A and F. The second is for the computing of the intersection of the line with circular arc for the computing of the centers of rotation points $C_F$ and $C_B$. For every operation, the following equations can be derived and formulated to be used in the calculations of the intermediate points of the parking path.

First, the intersection point $(x_P, y_P)$ of the two given lines $\{x_1, y_1, K_1\}$ and $\{x_2, y_2, K_2\}$ can be obtained as follows where $(x_1, y_1)$ and $(x_2, y_2)$ are points located on the two given lines, and $K_1$ and $K_2$ are their slopes, respectively.

$$y_P = y_1 + K_1\,(x_P - x_1)$$

$$y_P = y_2 + K_2\,(x_P - x_2)$$

By subtracting both equations,

$$0 = y_1 - y_2 + (K_1 - K_2)\,x_P - K_1 x_1 + K_2\,x_2$$

$$x_P = \frac{y_2 - y_1 - K_2 x_2 + K_1 x_1}{K_1 - K_2}$$

$$y_P = y_1 + K_1(x_P - x_1)$$

Second, the intersection point $(x_N, y_N)$ of the given line $\{x_1, y_1, K_1\}$ and given circle $\{x_2, y_2, R_2\}$ can be obtained as follows where $(x_1, y_1)$ is a point located on the given line and $K_1$ is its slope, and $(x_2, y_2)$ is the center point of the given circle and $R_2$ is its radius.

$$y_N = y_1 + K_1\,(x_N - x_1)$$

$$(y_N - y_2)^2 + (x_N - x_2)^2 = R_2{}^2$$

From the line equation:

$$x_N = x_1 + \left(\frac{1}{K_1}\right)(y_N - y_1)$$

$$m = \frac{1}{K_1}$$

By substitution on the circle equation,

$$(y_N - y_2)^2 + (x_1 + m(y_N - y_1) - x_2)^2 = R_2{}^2$$

$$y_N{}^2 - 2y_2y_N + y_2{}^2 + (x_1 - x_2)^2 + m^2(y_N - y_1)^2 + 2m(x_1 - x_2)(y_N - y_1) = R_2{}^2$$

$$(m^2 + 1)y_N{}^2 - 2[y_2 + m^2 y_1 - m(x_1 - x_2)]y_N$$
$$+ \left[y_2{}^2 + (x_1 - x_2)^2 + m^2 y_1{}^2 - 2my_1(x_1 - x_2) - R_2{}^2\right] = 0$$

$$y_N = \frac{y_2 + m^2 y_1 + m(x_2 - x_1) \pm \sqrt{(m^2 + 1)R_2{}^2 - \left(m(y_2 - y_1) - (x_2 - x_1)\right)^2}}{(m^2 + 1)}$$
$$x_N = x_1 + m(y_N - y_1)$$

From the two obtained intersection points of the line with the circle, only one can be specified either the upper or the lower one according to the defined constraints in the problem. For example the center of rotation point $C_F$ can be the upper intersection point of the second circle 16 with the vehicle parallel passing line 15 for the right parking space 4, or the lower intersection point for the left parking space 4.

Based on the declared steps and obtained equations for the geometric operations, the calculation of the intermediate points necessary for the parking path generation can be formulated.

## Claims

1. Method to operate an at least assisted perpendicular or angled parking function (3) for a vehicle (1), wherein the vehicle (1) approaches a perpendicular or angled parking space (4) with a forward driving maneuver until it reaches a current location (P) suitable for forward parking in the perpendicular or angled parking space (4), wherein the method comprises:

   - providing (S2) a sensor information (12) describing the perpendicular or angled parking space (4);
   - under consideration of the sensor information (12) determining (S3) a parking maneuver (13) for backward parking comprising a change of driving direction at a turning location (B) from which the vehicle (1) is drivable backward to an ending location (F) at which the vehicle (1) is at least partially located in the parking space (4);
   - operating (S4) the vehicle (1) at least assisted according to the determined parking maneuver (13) from its current location (P) to the turning location (B) and from there to the ending location (F).

2. Method according to claim 1, wherein the parking maneuver (13) comprises driving between the turning location (B) and the ending location (F) with a constant steering angle of at least 80 percent, in particular between 90 percent and 95 percent, of a maximum steering angle of a steering system of the vehicle (1).

3. Method according to claim 1 or 2, wherein the parking maneuver (13) comprises driving to a starting location (A) from which the turning location (B) is reachable by driving forward with a constant steering angle of at least 80 percent, in particular between 90 percent and 95 percent, of a maximum steering angle of a steering system of the vehicle (1).

4. Method according to claim 3, wherein the parking maneuver (13) follows a first curved trajectory (14) between the starting location (A) and the turning location (B), wherein the first curved trajectory (14) follows a circular segment of a first circle with a first circle center which is calculated under consideration of an object corner (E) of an object (6) that laterally limits the parking space (4) in direction of the turning location (B).

5. Method according to claim 4, wherein the first circle center is located at an intersection point of a vehicle parallel passing line (15) and a second circle with a radius equal to a rotational radius of an outermost corner (25) of the vehicle (1) when driving with the constant steering angle and a second circle center located at the object corner (E), wherein the vehicle parallel passing line (15) is aligned parallel to a vehicle passing line (17), which the vehicle (1) follows if it drives straight forward and/or backward from the current location (P), at an offset (18) equal to a rotational radius of the vehicle (1) when driving with the constant steering angle.

6. Method according to claim 5, wherein the rotational radius of the outermost corner (25) of the vehicle (1) is calculated under consideration of the rotational radius of the vehicle (1) when driving with the constant steering angle, a vehicle length, a vehicle width and a distance between a rear axle and a rear bumper of the vehicle (1).

7. Method according to claim 5 or 6, wherein the starting location (A) is calculated by projecting the first circle center on the vehicle passing line (17).

8. Method according to any one of claims 4 to 7, wherein the parking maneuver (13) follows a second curved trajectory (19) between the turning location (B) and the ending location (F), wherein the second curved trajectory (19) follows a circular segment of a third circle with a third circle center which is calculated under consideration of the first circle center and a goal line (20) on which the vehicle (1) is located at the ending location (F).

9. Method according to claim 8, wherein the third circle center is located at an intersection point of a goal parallel line (21) and a fourth circle with a radius equal to the double rotational radius of the vehicle (1) when driving with the constant steering angle and a fourth circle center equal to the first circle center, wherein the goal parallel line (21) is aligned parallel to the goal line (20) at an offset (18) equal to the rotational radius of the vehicle (1) when driving with the constant steering angle in direction of the object (6).

10. Method according to any one of claims 4 to 7 and claim 8 or 9, wherein the turning location (B) is located at a midpoint of a straight line (23) between the first circle center and the third circle center.

11. Method according to claim 10, wherein a driving direction (24) at the turning location (B) is perpendicular to the straight line (23).

12. Method according to any one of claims 8 to 11, wherein the ending location (F) is calculated by projecting the third circle center on the goal line (20).

13. Method according to any one of the preceding claims, wherein the parking maneuver (13) comprises driving straight backward from the ending location (F) to a parking location (G) in the parking space (4), wherein compared to the ending location (F) the parking location (G) is closer to an end line (10) that limits the parking space (4) in a length direction of the parking space (4).

14. Vehicle (1) configured to perform a method according to any one of the preceding claims.

15. Control device (2) for a vehicle (1), wherein the control device (2) is configured to perform a method according to any one of claims 1 to 13.

16. Computer program product comprising instructions which, when the program is executed by a computer, cause the computer to carry out a method according to any one of the claims 1 to 13.

Fig. 1

Fig.2

Fig.3

Fig.4

EP 4 454 976 A1

Europäisches
Patentamt

European
Patent Office

Office européen
des brevets

# EUROPEAN SEARCH REPORT

Application Number

EP 23 17 0872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 009778 A1 (MANDO CORP [KR]) 19 January 2017 (2017-01-19) | 1,14-16 | INV. B62D15/02 G01S5/16 |
| Y | * paragraph [0068]; claims; figures * | 2-4,8,13 | |
| A | | 5-7,9-12 | |
| Y | KR 101 593 839 B1 (HYUNDAI AUTRON CO LTD [KR]) 15 February 2016 (2016-02-15) * paragraphs [0050] – [0071]; claims; figures * | 2-4,8,13 | |
| A | US 2013/166190 A1 (IKEDA KEIGO [JP] ET AL) 27 June 2013 (2013-06-27) * paragraphs [0052], [0074]; claims; figures * | 1-16 | |
| A | US 2010/100270 A1 (KUO YUNG-YUAN [TW] ET AL) 22 April 2010 (2010-04-22) * paragraph [0040]; claims; figures * | 1-16 | |

TECHNICAL FIELDS SEARCHED (IPC)

B62D
B60W
G01S

The present search report has been drawn up for all claims

| Place of search | Date of completion of the search | Examiner |
|---|---|---|
| The Hague | 2 October 2023 | Ducher, Alban |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0872

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | Publication date | Patent family member(s) | Publication date |
|---|---|---|---|
| DE 102015009778 A1 | 19-01-2017 | CN 106347362 A | 25-01-2017 |
| | | DE 102015009778 A1 | 19-01-2017 |
| | | KR 20170008459 A | 24-01-2017 |
| | | US 9522675 B1 | 20-12-2016 |
| KR 101593839 B1 | 15-02-2016 | NONE | |
| US 2013166190 A1 | 27-06-2013 | CN 103079903 A | 01-05-2013 |
| | | EP 2647528 A1 | 09-10-2013 |
| | | JP 5516992 B2 | 11-06-2014 |
| | | JP 2012116282 A | 21-06-2012 |
| | | US 2013166190 A1 | 27-06-2013 |
| | | WO 2012073592 A1 | 07-06-2012 |
| US 2010100270 A1 | 22-04-2010 | TW 201016506 A | 01-05-2010 |
| | | US 2010100270 A1 | 22-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200122775 A1